## Europäisches Patentamt

## European Patent Office

## Office européen des brevets

(11) Numéro de publication: **0 211 295 B1**

(12) **FASCICULE DE BREVET EUROPEEN**

(45) Date de publication du fascicule du brevet:
06.09.89

(51) Int. Cl.⁴: **C 21 B 5/00, B 65 G 53/52**

(21) Numéro de dépôt: 86109913.3

(22) Date de dépôt: 18.07.86

(54) Procédé et dispositif d'injection, par voie pneumatique, de quantités dosées de matières pulvérulentes dans une enceinte se trouvant sous pression variable.

(30) Priorité: 05.08.85 LU 86034

(43) Date de publication de la demande:
25.02.87 Bulletin 87/9

(45) Mention de la délivrance du brevet:
06.09.89 Bulletin 89/36

(84) Etats contractants désignés:
AT BE DE FR GB IT NL SE

(56) Documents cités:
EP-A- 0 068 115
EP-A- 0 140 075
DE-A- 3 247 660
DE-C- 410 681
FR-A- 648 588
FR-A- 735 264
FR-A- 735 373
GB-A- 312 474
GB-A- 1 310 886
US-A- 3 189 230
US-A- 4 562 968

(73) Titulaire: PAUL WURTH S.A., 32 rue d'Alsace,
L-1122 Luxembourg (LU)

(72) Inventeur: Ulveling, Léon, 30 rue Dr Jos Peffer, Howald (LU)
Inventeur: Linden, Joseph, 169 Avenue Gaston Diderich, Luxembourg (LU)
Inventeur: Bohnet, Matthias, Prof. Dr. Ing., Otto-Hahnstrasse 45, D-3300 Braunschweig (DE)
Inventeur: Wies, Georges, 14 rue Charles Arendt, L-1134 Luxembourg (LU)
Inventeur: Mack, Raymond, 4 rue Martzen II, L-7774 Colmar Berg (LU)

(74) Mandataire: Meyers, Ernest et al, Office de Brevets FREYLINGER & ASSOCIES B.P. 1 321, route d'Arlon, L-8001 Strassen (LU)

## Description

La présente invention concerne un procédé et un dispositif d'injection, par voie pneumatique, de quantités dosées de matières pulvérulentes à des endroits différents d'une enceinte se trouvant sous pression variable, procédé selon lequel on forme un mélange pneumatique comprenant une teneur relativement élevée de matières pulvérulentes dans de l'air de propulsion et on imprime à ce mélange une vitesse super-critique avant son injection dans l'enceinte.

Quoique n'y étant pas limitée, l'invention sera décrite plus particulièrement en référence à son application préférée, c'est-à-dire l'injection de combustibles solides comme du charbon en poudre, dans un four industriel, tel qu'un four à cuve, en particulier un haut fourneau.

Le document DE-A-3 325 901 propose déjà un procédé de ce genre dans lequel le courant pneumatique est accéléré jusqu'à la vitesse supercritique, c'est-à-dire, la vitesse du son qui est, bien entendu, variable en fonction de la densité du courant. L'accélération du courant pneumatique jusqu'à une vitesse super-critique a l'avantage que les conditions d'écoulement en amont de l'endroit où se produit la vitesse super-critique ne sont plus influencées par les conditions d'écoulement en aval de cet endroit. Ceci présente, bien entendu, le grand avantage qu'on ne doit plus tenir compte des fluctuations de pression et d'autres paramètres variables existant dans l'enceinte dans laquelle les matières pulvérulentes sont injectées.

Le document Fr-A-735 264 décrit par ailleurs un distributeur de charbon pulvérisé en suspension dans un courant d'air, dont la conduite principale est reliée aux conduites d'embranchement par un manchon dans lequel se trouve un corps creux de forme conique.

On sait que les hauts fourneaux comportent à leur base une garniture circulaire de tuyères recevant, chacune, de l'aire chaud sous pression à travers des porte-vents connectant ces tuyères à une conduite circulaire d'alimentation en vent chaud. C'est en général directement dans les tuyères ou les porte-vents que sont injectés les combustibles solides nécessaires à l'entretien du processus de réduction dans le four.

Le document précité DE-A-3 325 901 propose de prévoir l'endroit d'accélération du mélange pneumatique jusqu'à vitesse super-critique au niveau de l'injection dans chacun des porte-vents. En conséquence, il est nécessaire de prévoir autant de doseurs que de porte-vents ainsi que des conduites individuelles pour véhiculer le mélange entre chaque doseur et chaque porte-vent.

Toutefois, compte tenu de la configuration circulaire du haut fourneau et de sa garniture de porte-vent, les conduites de transport entre les doseurs et les porte-vents ont forcément toutes, ou au moins tous les couples de conduites des longueurs différentes. Ces différentes longueurs entraînent, évidemment, des différences de chute de pression qui modifient les conditions de transport d'une conduite à l'autre.

Le but de la présente invention est de prévoir un nouveau procédé et dispositif d'injection qui permet d'éviter ce problème, c'est-à-dire, qui prévoit des conditions de transport pneumatique plus faciles à maîtriser avant l'endroit d'accélération jusqu'à la vitesse super-critique.

Pour atteindre cet objectif, le procédé proposé par la présente invention est essentiellement caractérisé en ce que l'on forme le mélange pneumatique dans un doseur unique, en ce que l'on propulse ce mélange à travers une conduite primaire commune jusqu'à une tête de distribution dans laquelle le mélange est scindé en courants secondaires qui sont envoyés respectivement à chacun des points d'injection et en ce que l'on imprime la vitesse super-critique au mélange au niveau de la tête de distribution.

Le double avantage qui en résulte est qu'il ne faut plus qu'un seul doseur pour alimenter toutes les tuyères du four et que les différentes longueurs de conduites nécessaires à l'alimentation de la garniture circulaire ou de porte-vent se trouvent au niveau des conduites secondaire, c'est-à-dire, entre l'endroit d'accélération jusqu'à vitesse super-critique et les tuyères. Or, les conditions différentes qui résultent des conduites de longueurs différentes se situant en aval de l'accélération à vitesse super-critique, ces conditions n'influencent plus le transport en amont de cet endroit, notamment dans la conduite primaire entre le doseur et l'endroit d'accélération à vitesse super-critique. Cet endroit se trouve évidemment le plus près possible du four.

Le dispositif pour la mise en oeuvre du procédé comprenant une tête de distribution ayant une ouverture d'admission du mélange pneumatique et une série d'ouvertures de sortie connectées respectivement par des conduites secondaires à chacun des points d'injection dans l'enceinte, est essentiellement caractérisé en ce que la tête de distribution comprend une série de canaux intérieurs dont le nombre correspond au nombre de points d'injection dans l'enceinte, ces canaux divergeant symétriquement par rapport à l'axe longitudinal de la tête de distribution depuis la région de l'ouverture d'admission jusqu'à une série d'ouvertures de sortie et en ce qu'un doseur est connecté à l'ouverture d'admission par une conduite primaire.

Les longueurs et sections des canaux intérieurs sont déterminées, en fonction de la section de la conduite primaire, de façon que se produise dans la tête de distribution la chute de pression requise entre la conduite primaire et chacune des conduites secondaires nécessaire à l'accélération du mélange jusqu'à vitesse super-critique.

D'autres particularités et caractéristiques ressortiront de la description d'un mode de réalisation avantageux, présenté ci-dessous, en référence aux dessins annexés, dans lesquels:

fig. 1 montre une vue schématique illustrant le procédé d'injection selon la présente invention;

fig. 2 montre une vue en perspective de la tête de distribution;

fig. 3 montre une coupe longitudinale à travers un premier mode de réalisation d'une tête de distribution et la

fig. 4 montre une coupe longitudinale à travers un second mode de réalisation d'une tête de distribution.

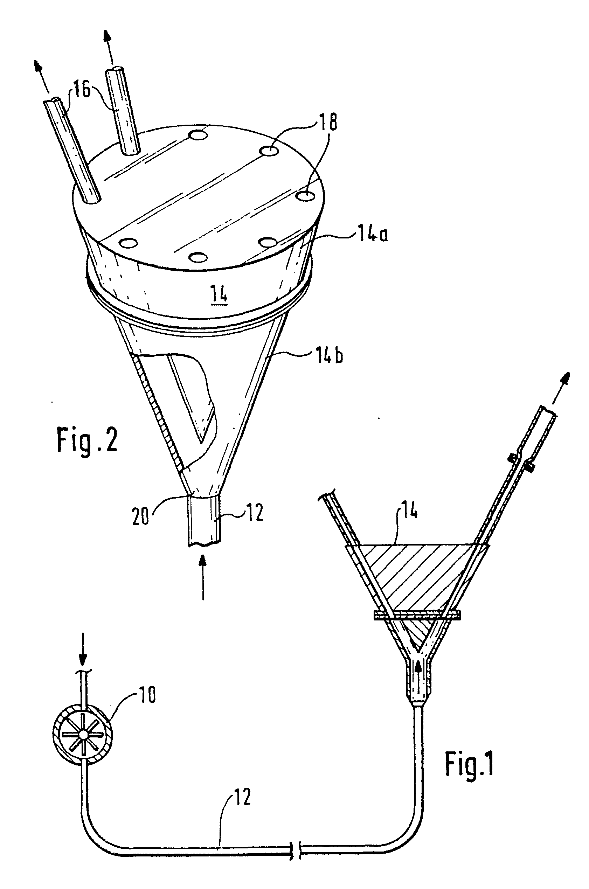

La figure 1 montre schématiquement un doseur 10 destiné à introduire de façon uniforme des quantités prédéterminées de matières pulvérulentes, par exemple du charbon en poudre dans de l'air sous pression destinée à véhiculer, par voie pneumatique, les matières pulvérulentes. Ce mélange est transporté à travers une conduite primaire 12 vers une tête de distribution 14 montée à proximité immédiate de l'enceinte dans laquelle est injectée la matière pulvérulente, par exemple le haut fourneau. La tête de distribution 14 a la double fonction de scinder le courant primaire en courants secondaires dont le nombre correspond au nombre de points d'injection dans l'enceinte et d'accélérer le mélange pneumatique jusqu'à la vitesse super-critique. Ceci signifie que les conditions de transport dans la conduite primaire 12 ne sont pas influencées ni par les conditions de transport dans les conduites secondaires, ni par les conditions existantes dans l'intérieur de l'enceinte.

Comme représenté à la figure 2, la tête de distribution 14 présente généralement une forme conique de l'aspect général d'une «pomme de douche» dont la base est pourvu d'une série circulaire d'ouvertures de sortie 18 connectées chacune à une conduite secondaire 16 et dont le sommet présente une ouverture d'admission 20 connectée à la conduite primaire 12. Pour des raisons de facilité de montage, la tête de distribution 14 peut être réalisée en deux pièces 14a et 14b fixées de façon étanche, l'une à l'autre.

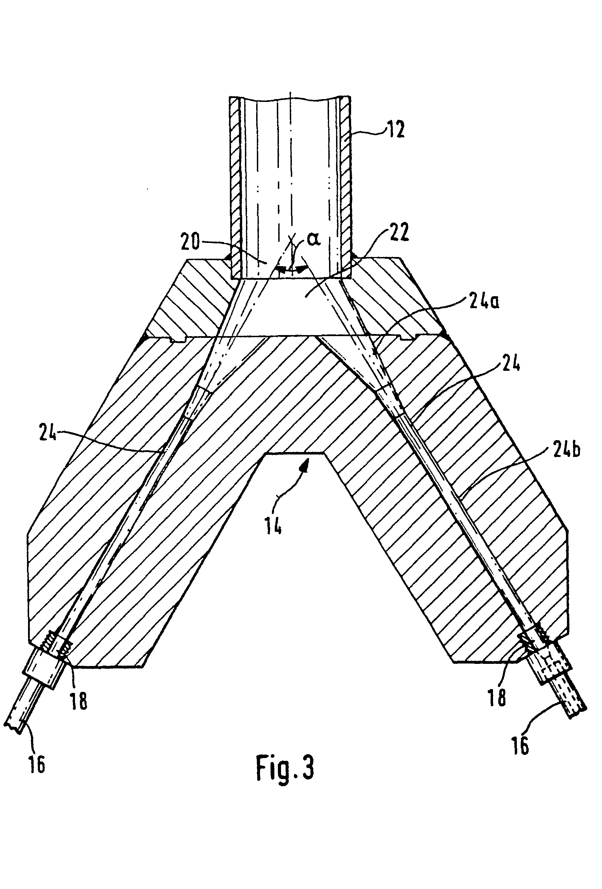

Comme le montre la figure 3, à l'intérieur de la tête de distribution 14 se trouve une série de canaux 24 qui divergent, de façon symétrique, depuis une chambre de répartition 22 en face de l'ouverture d'admission 20 vers chacune des ouvertures de sortie 18. Chacun des canaux 24 comporte une section convergente 24a, immédiatement en aval de la chambre de répartition 22 et une section rectiligne 24b. Le diamètre de chacun des canaux 24 est calculé en fonction de la section de la conduite primaire 12 de manière que se produise dans cette tête de distribution 14 ou à sa sortie la chute de pression nécessaire à l'accélération jusqu'à la vitesse super-critique. Cette chute de pression est en général déterminée de manière que le rapport entre la pression dans la conduite primaire 12 et celle dans chacune des conduites secondaires soit de l'ordre de 1,6 à 2. L'angle de divergence entre deux canaux 24 diamétralement opposés est de l'ordre de 30°.

Il est essentiel que la chambre de répartition 22 ainsi que les sections convergentes 24a des canaux 24 présentent une configuration absolument symétrique par rapport à l'axe longitudinal de la conduite primaire 12 afin d'obtenir une répartition uniforme de la matière pulvérulente dans les différents canaux 24.

Il est possible d'ajouter au mélange pneumatique de l'air secondaire afin de «diluer» le mélange et favoriser les conditions de transport. Cette addition d'air secondaire peut être effectuée soit au niveau de la chambre de répartition 22, soit au niveau de chacun des canaux 24, soit au niveau des conduites secondaires 16.

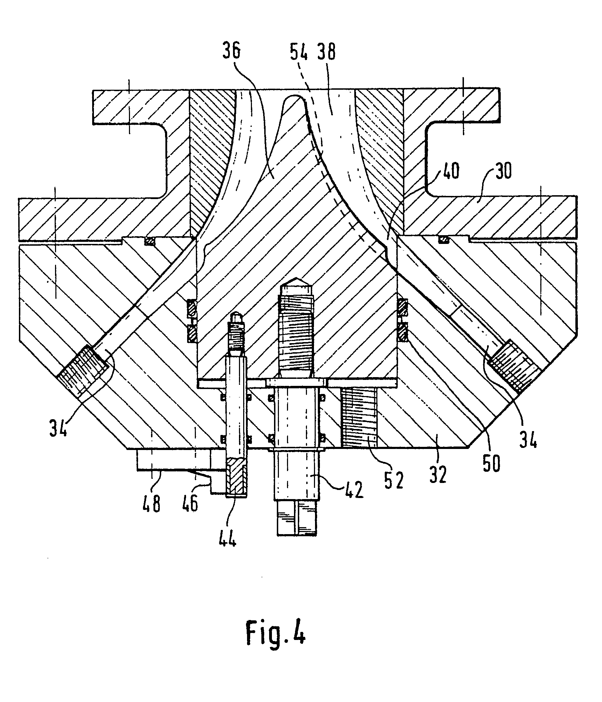

La figure 4 montre un mode de réalisation avantageux d'une tête de distribution qui est réalisée entièrement par usinage sur tour. Contrairement au mode de réalisation de la figure 3, celui de la figure 4 présente des contours intérieurs arrondis pour optimaliser les conditions d'écoulement.

La tête de distribution de la figure 4 comporte une partie supérieure 30 et une partie inférieure 32 vissées de manière étanche l'une contre l'autre. La partie supérieure 32 comporte une bride de raccordement sur une conduite primaire, alors que la partie inférieure contient les canaux divergents 34 correspondants aux canaux 24 de la figure 3 et raccordables aux conduites secondaires.

La partie inférieure comporte un alésage cylindrique central qui constitue le logement d'un cône de distribution 36 dont la pointe effilée s'étend dans la partie supérieure 30 et qui définit avec la paroi intérieure de celle-ci un passage 38 à section annulaire. Le passage 38 qui s'étend entre la conduite primaire et l'entrée de chacun des canaux 34 assure une répartition uniforme du mélange sur chacun des canaux 34. La base du cône 36 forme au niveau de l'entrée dans les canaux 34 et par rapport à ceux-ci, un étranglement annulaire 40 avec le bord intérieur de la partie supérieure 30 pour assurer l'accélération du mélange pneumatique à la vitesse super-critique.

Le profil du cône 36 et de la paroi intérieure de la partie 30 est réalisé de telle manière que la surface de la section horizontale annulaire du passage 38 diminue progressivement depuis la pointe du cône 36 jusqu'à l'étranglement 38 ou reste tout au plus constant.

Alors que dans le mode de réalisation selon la figure 3 les conditions de transport, notamment le débit de la matière pulvérulente est réglé par une addition d'air secondaire, cette régulation est assurée dans le mode de réalisation de la figure 4 grâce à une mobilité axiale du cône 36. Celui-ci est, en effet, déplaçable axialement sous l'action d'un mécanisme de déplacement 42 comme p.ex. à vis entre la position illustrée sur la figure 4 et des positions plus ouvertes par descente du cône 36 au fond de son logement.

Un indicateur de position 44 permet de visualiser à l'extérieur la position du cône 36. Cet indicateur 44 peut par exemple être du genre où le déplacement axial du cône 36 est transformé en rotation d'une tige et d'une aiguille 46 qui pivote devant un cadran 48.

L'étanchéité autour du cône mobile 36 est assurée par des bourrages 50. L'étanchéité peut, en outre, être améliorée, en cas de besoin par une injection de gaz sous pression, à contre-sens, à travers une ouverture 52 dans la partie inférieure 32.

Pour améliorer la distribution de la matière pulvérulente dans le passage 38 il est possible de prévoir sur le cône 36 dans le prolongement de chacun des canaux 34 des rainures arrondies symbolisées schématiquement par la ligne en traits interrompus 54 et dont la profondeur diminue progressivement depuis l'étranglement 40 jusqu'au sommet du cône 36.

Pour réduire les risques d'engorgement à l'entrée des canaux 34 il est possible, selon une variante du mode de réalisation de la figure 4 de faire subir au cône 36 une lente rotation autour de son axe. Toutefois, dans ce cas il faudra adapter le mécanisme 42 et l'indicateur 44 à cette possibilité.

## Revendications

1. Procédé d'injection, par voie pneumatique, de quantités dosées de matières pulvérulentes à des endroits différents d'une enceinte se trouvant sous pression variable, selon lequel on forme un mélange pneumatique comprenant une teneur relativement élevée de matières pulvérulentes dans de l'air de propulsion et on imprime à ce mélange une vitesse super-critique avant son injection dans l'enceinte, caractérisé en ce que l'on forme le mélange pneumatique dans un doseur unique, en ce que l'on propulse ce mélange à travers une conduite primaire commune jusqu'à une tête de distribution dans laquelle le mélange est scindé en courants secondaires qui sont envoyés respectivement à chacun des points d'injection et en ce que l'on imprime la vitesse super-critique au mélange au niveau de la tête de distribution.

2. Procédé selon la revendication 1, caractérisé en ce que la matière pulvérulente est du charbon en poudre.

3. Dispositif pour la mise en oeuvre du procédé selon la revendication 1, comprenant une tête de distribution (14) ayant une ouverture (20) d'admission du mélange pneumatique et une série d'ouvertures de sortie (18) connectées respectivement par des conduites secondaires (16) à chacun des points d'injection dans l'enceinte, caractérisé en ce que la tête de distribution (14) comprend une série de canaux intérieurs (24, 34) dont le nombre correspond au nombre de points d'injection dans l'enceinte, ces canaux (24, 34) divergeant symétriquement par rapport à l'axe longitudinal de la tête de distribution depuis la région de l'ouverture d'admission (20) jusqu'à la série d'ouvertures de sortie (18) et en ce qu'un doseur (10) est connecté à l'ouverture d'admission (20) par une conduite primaire (12).

4. Dispositif selon la revendication 3, caractérisé par une chambre de répartition (22) disposée en aval de l'ouverture d'admission (20) et en amont de chacun des canaux (24).

5. Dispositif selon l'une quelconque des revendications 3 ou 4, caractérisé en ce que les canaux (24) comportent chacun une section convergente (24a) et une section rectiligne (24b).

6. Dispositif selon l'une quelconque des revendications 3 à 5, caractérisé en ce que ladite enceinte est un four à cuve.

7. Tête de distribution pour la mise en oeuvre du procédé selon la revendication 1, caractérisée par deux parties usinées (30, 32) vissées de façon étanche l'une sur l'autre dont l'une (32) comporte des canaux (34) et un logement central d'un cône de distribution (36) définissant avec la paroi intérieure de l'autre partie (30) un passage (38) à section annulaire s'étendant de la pointe du cône jusqu'à l'entrée des canaux (34).

8. Tête de distribution selon la revendication 7, caractérisée en ce que la surface de la section annulaire du passage (38) est constante sur toute sa longueur ou diminue progressivement en direction des canaux (34).

9. Tête de distribution selon la revendication 8, caractérisée en ce que la section du passage (38) est réglable par déplacement axial du cône (36).

10. Tête de distribution selon la revendication 9, caractérisée par un indicateur (44) de la position axiale du cône de distribution (36).

11. Tête de distribution selon la revendication 7, caractérisée en ce que le cône (36) est pourvu sur sa périphérie de rainures dans le prolongement de chacun des canaux (34).

12. Tête de distribution selon la revendication 7, caractérisée en ce que le cône (36) est mobile autour de son axe longitudinal.

## Patentansprüche

1. Verfahren zum pneumatischen Einblasen von dosierten Mengen feinpulveriger Materialien an verschiedenen Stellen eines unter variablem Druck stehenden Gehäuses, wobei gemäß diesem Verfahren ein pneumatisches Gemisch mit einem relativ hohen Gehalt an feinpulverigen Materialien in der Einblasluft gebildet wird, und diesem Gemisch vor dem Einblasen in das Gehäuse eine superkritische Geschwindigkeit erteilt wird, dadurch gekennzeichnet, daß das pneumatische Gemisch in einer einzigen Dosiervorrichtung erzeugt wird, daß dieses Gemisch durch eine gemeinsame primäre Leitung bis zu einem Verteilerkopf transportiert wird, in dem das Gemisch in sekundäre Ströme aufgespalten wird, die nach jedem der Einblaspunkte weitergeleitet werden, und daß dem Gemisch die superkritische Geschwindigkeit im Bereich des Verteilerkopfes erteilt wird.

2. Verfahren gemäß Anspruch 1, dadurch gekennzeichnet, daß das feinpulverige Material Staubkohle ist.

3. Vorrichtung zur Verwirklichung des Verfahrens gemäß Anspruch 1, aus einem Verteilerkopf (14) mit einer Öffnung (20) zum Zuführen des pneumatischen Gemischs, und einer Reihe von Ausgangsöffnungen (18), die über sekundäre Leitungen (16) mit jedem der Gehäuse-Einblaspunkte verbunden sind, dadurch gekennzeichnet, daß der Verteilerkopf (14) eine Reihe von inneren Kanälen (24, 34) aufweist, deren Anzahl der Anzahl der Gehäuse-Einblaspunkte entspricht, wobei diese Kanäle (24, 34) bezüglich der Längsachse des Verteilerkopfes von dem Gebiet der Zuführungsöffnung (20) bis zu der Reihe von Ausgangsöffnungen (18) symmetrisch auseinanderlaufen, und daß über eine primäre Leitung (12) eine Dosiervorrichtung (10) an die Zuführungsöffnung (20) angeschlossen ist.

4. Vorrichtung gemäß Anspruch 3, gekennzeichnet durch eine Verteilerkammer (22), die stromabwärts von der Zuführungsöffnung (20) und stromaufwärts von jedem der Kanäle (24) angeordnet ist.

5. Vorrichtung gemäß irgendeinem der Ansprüche 3 oder 4, dadurch gekennzeichnet, daß jeder der Kanäle (24) einen konvergenten Abschnitt (24a) und einen geradlinigen Abschnitt (24b) aufweist.

6. Vorrichtung gemäß irgendeinem der Ansprüche 3 bis 5, dadurch gekennzeichnet, daß das besagte Gehäuse ein Schachtofen ist.

7. Verteilerkopf zur Verwirklichung des Verfahrens gemäß Anspruch 1, gekennzeichnet durch zwei maschinell bearbeitete Teile (30, 32), die luftdicht zusammengeschraubt sind, wobei der eine Teil (32) Kanäle (34) und einen zentralen Sitz für einen Verteilerkonus (36) aufweist, und dieser Verteilerkonus (36) mit der inneren Wand des anderen Teils (30) einen Durchgang (38) von ringförmigem Querschnitt definiert, der sich von der Spitze des Konus bis zu dem Eingang der Kanäle (34) erstreckt.

8. Verteilerkopf gemäß Anspruch 7, dadurch gekennzeichnet, daß die Fläche des ringförmigen Querschnitts des Durchgangs (38) über die gesamte Länge des Durchgangs (38) konstant ist oder in Richtung der Kanäle (34) in progressiver Weise abnimmt.

9. Verteilerkopf gemäß Anspruch 8, dadurch gekennzeichnet, daß der Querschnitt des Durchgangs (38) durch axiale Verschiebung des Konus (36) einstellbar ist.

10. Verteilerkopf gemäß Anspruch 9, gekennzeichnet, durch einen Indikator (44) für die axiale Position des Verteilerkonus (36).

11. Verteilerkopf gemäß Anspruch 7, dadurch gekennzeichnet, daß der Konus (36) auf seinem Umfang in der Verlängerung von jedem der Kanäle (34) mit Nuten versehen ist.

12. Verteilerkopf gemäß Anspruch 7, dadurch gekennzeichnet, daß der Konus (36) um seine Längsachse beweglich ist.

## Claims

1. Process for the injection by pneumatic means of metered amounts of pulverulent materials at different points into a vessel which is under variable pressure, whereby a pneumatic mixture is formed which has a relatively high content of pulverulent materials in the propulsion air and a supercritical speed is imparted to this mixture before it is injected into the vessel, characterized in that the pneumatic mixture is formed in a single metering means, in that this mixture is propelled through a common primary pipe to a distribution head in which the mixture is divided into secondary currents which are delivered respectively to each of the injection points, and in that the supercritical speed is imparted to the mixture at the distribution head.

2. Process according to claim 1, characterized in that the pulverulent material is powdered coal.

3. Apparatus for carrying out the process according to Claim 1, comprising a distributor head (14) having an opening (20) for admission of the pneumatic mixture and a series of outlet openings (18) connected respectively by secondary pipes (16) to each of the points where injection is effected into the vessel, characterized in that the distribution head (14) has a series of internal ducts (24, 34) whose number corresponds to the number of points where injection is effected into the vessel, these ducts (24, 34) diverging symmetrically relative to the longitudinal axis of the distribution head from the region of the admission opening (20) to the series of outlet openings (18) and in that a metering means (10) is connected to the admission opening (20) via a primary pipe (12).

4. Apparatus according to Claim 3, characterized by a distribution chamber (22) disposed downstream of the admission opening (20) and upstream of each of the ducts (24).

5. Apparatus according to any one of Claims 3 or 4, characterized in that each of the ducts (24) comprises a convergent portion (24a) and a rectilinear portion (24b).

6. Apparatus according to any one of Claims 3 to 5, characterized in that said vessel is a shaft furnace.

7. Distribution head for carrying out the process according to Claim 1, characterized by two machined parts (30, 32) screwed leaktightly to one another, of which one (32) is provided with ducts (34) and a central housing for a distribution cone (36) defining with the inner wall of the other part (30) a passage (38) having an annular section and extending from the tip of the cone to the inlets of the ducts (34).

8. Distribution head according to Claim 7, characterized in that the surface of the annular section of the passage (38) is constant over its entire length or decreases progressively in the direction of the ducts (34).

9. Distribution head according to Claim 8, characterized in that the section of the passage (38) is adjustable by axial displacement of the cone (36)

10. Distribution head according to Claim 9, characterized by an indicator (44) for the axial position of the distribution cone (36).

11. Distribution head according to Claim 7, characterized in that the cone (36) is provided on its periphery with grooves in line with each of the ducts (34).

12. Distribution head according to Claim 7, characterized in that the cone (36) is movable about its longitudinal axis.

Fig.2

Fig.1

Fig.3

Fig.4